Europäisches Patentamt

European Patent Office

Office européen des brevets

(19)

(11) Publication number: **0 037 093**
**A2**

(12) **EUROPEAN PATENT APPLICATION**

(21) Application number: **81102309.2**

(22) Date of filing: **27.03.81**

(51) Int. Cl.³: **C 08 J 9/22**
//C08L25/06

(30) Priority: **31.03.80 US 135577**
**24.02.81 US 237558**

(43) Date of publication of application:
**07.10.81 Bulletin 81/40**

(84) Designated Contracting States:
**BE DE FR GB IT NL**

(71) Applicant. **BASF WYANDOTTE CORPORATION**
**1609 Biddle Avenue**
**Wyandotte Michigan 48192(US)**

(72) Inventor: **Kienzle, Charles**
**87 Farms Road Circle**
**East Brunswick New Jersey 08816(US)**

(72) Inventor: **Boghosian, John William**
**10-08 Deer Creek Drive**
**Plainsboro New Jersey 08536(US)**

(72) Inventor: **Gahmig, Herbert Martin**
**233 Kaiserslauterer Strasse**
**D-6702 Bad Duerkheim(DE)**

(74) Representative: **von Günner, Kurt, Dr. et al,**
**BASF Aktiengesellschaft Carl-Bosch-Strasse 38**
**D-6700 Ludwigshafen(DE)**

(54) **Expandable polystyrene beads.**

(57) Expandable polystyrene beads are coated with titanium dioxide. The coated beads exhibit a reduced tendency to agglomerate. Products made from the coated beads exhibit substantially equivalent fusion and flame resistance properties as products made from uncoated beads.

EP 0 037 093 A2

## Expandable polystyrene beads

This invention relates to expandable polystyrene beads. In particular, this invention relates to expandable polystyrene beads coated with titanium dioxide and articles made therefrom.

Coating expandable polystyrene beads to prevent agglomeration at a subsequent stage of processing has been disclosed in the prior art. Various substances have been proposed such as zinc stearate, other water-insoluble soaps or finely-divided silica. Articles made from these beads, however, have reduced flame resistance properties.

Surprisingly, beads coated with 50 parts per million to 5000 parts per million by weight of titanium dioxide exhibit desirable anti-agglomeration, and articles therefrom do not have reduced fusion or flame resistance properties. The titanium dioxide can readily be detected with the use of ultraviolet light, making it possible to distinguish between coated and uncoated expandable polystyrene beads or articles made therefrom.

Expandable polystyrene beads having a diameter of 0.2 millimeter to 5.0 millimeters are coated with 50 parts per million to 5000 parts per million of a finely-divided and substantially pure grade of titanium dioxide having a particle size between 5 millimicrons and 1000 millimicrons to provide reduced agglomeration of the beads without substantially reducing the fusion or flame resistance properties of articles made therefrom.

In the practice of the invention, beads of expandable polystyrene, usually having a diameter of 0.2 millimeter to 5.0 millimeters, preferably from 0.4 millimeter to 1.0 millimeter, and having been adequately dried, are fed into a mixer, tumbler or blender of a capacity of about 20 kilograms to 300 kilograms. The titanium dioxide, in amount of 50 parts per million to 5000 parts per million based upon the weight of beads to be treated, preferably 200 parts per million to 1200 parts per million based upon the weight of beads to be treated, is fed to the mixer. The mixer is operated to achieve a uniform coating on the beads. The beads are then used for making articles having a bulk density of 14.5 to 80 g.l$^{-1}$.

The titanium dioxide which is to be used in accordance with the present invention is finely divided, having particle sizes ranging mainly between 5 millimicrons and 1000 millimicrons, preferably 15 millimicrons to 300 millimicrons. Similar results are not obtained with ordinary pigment grade titanium dioxide which has a particle size ranging from 15 micron to 500 microns. One preferred special grade of titanium dioxide used in accordance with this invention is sold by Deutsche Gold- und Silberscheide Anstalt (Degussa) under the designation "P25". Also preferred is titanium dioxide which is coated with certain organic or inorganic material, said coated titanium dioxide having a particle size of about 160 millimicrons to 240 millimicrons.

Alternatively, expandable polystyrene beads having a diameter of 0.2 millimeter to 5.0 millimeters are coated with a mixture of 50 parts per million to 2500 parts per million based on the weight of beads to be treated, of a finely-divided and substantially pure grade of titanium dioxide having a particle size between 5 millimicrons and 1000 millimicrons, and 50 parts per million to 2500 parts per million based on the weight of beads to be treated, of a conventional anti-agglomeration agent to provide reduced agglomeration of the beads without substantially reducing the fusion and flame resistant properties of the articles made therefrom.

Typical anti-agglomeration agents are the metal salts of a fatty acid. The salts contain a metal ion such as zinc, magnesium, calcium, sodium and other metal ions and a chain of alkyl groups containing from 4 carbon atoms to 22 carbon atoms and characterized by a terminal carboxyl radical with the hydrogen replaced with a metal.

The metal salt of a fatty acid, which is to be used in accordance with the present invention, preferably has a particle size such that 60 percent to 100 percent of the particles fit through a 0.032 millimeter screen. Preferably used is zinc stearate.

Other anti-agglomeration agents which may be combined in a mixture with the titanium dioxide include hydrophobic silica, for instance, as mentioned in U.S. 3,661,810.

The following examples will help to illustrate this invention. All parts are by weight unless otherwise indicated.

## Examples 1-10

Examples 1-10 show the results of UL 94 Flammability Tests for uncoated beads and beads coated with various inorganic substances. The coatings were all done in the amounts of 1000 parts per million. Samples of the finished product made from these beads of 12.5 x 5 x 1.25 cm were tested. The results are summarized in Table 1 below.

### Table 1

| Example | Coating | Average Density ($g.l^{-1}$) | Extinguishing Time (ave.) (sec.) | (sec.) | Burning Droplets |
|---|---|---|---|---|---|
| 1 | Uncoated | 53 | 4.3 | max 8.5<br>min 2.7 | 7 |
| 2 | Titanium Dioxide | 53 | 4.9 | max 7.3<br>min 3.1 | 1 |
| 3 | Aluminum Hydrate | 56 | 6.9 | max 9.6<br>min 4.4 | 26 |
| 4 | Aluminum Oxide | 53 | 8.5 | max 12.5<br>min 4.6 | 40 |
| 5 | Silicon Dioxide coated with ~5% Polydimethyl siloxane | 64 | 9.4 | max 15.5<br>min 6.3 | 77 |
| 6 | Uncoated | 75 | 5.7 | max 11.4<br>min 3.0 | 18 |
| 7 | Titanium Dioxide | 77 | 9.2 | max 14.8<br>min 4.6 | 42 |
| 8 | Aluminum Hydrate | 82 | 13.0 | max 16.6<br>min 7.4 | 99 |
| 9 | Aluminum Oxide | 80 | 17.6 | max 19.1<br>min 15.3 | 165 |
| 10 | Silicon Dioxide coated with ~5% Polydimethyl siloxane | 83 | 27.3 | max 13<br>min 20 | 310 |

Foams made from beads coated with titanium dioxide showed lower, and therefore better, flame resisting properties than foams made from beads with other coatings.

### Examples 11-15

A vertical flammability test was conducted. Samples were made from uncoated expandable polystyrene beads and beads coated with various materials. The samples, 20 x 2.5 x 2.5 cm, were conditioned seven days at 70°C, brought to room temperature and fastened vertically three inches above a Bunsen burner tube. The burner was ignited to have a six inch blue, coneless flame. The burner flame was placed below the sample for three seconds and then removed. The time evolved between removing the burner flame and sample extinguishment was recorded. The coatings were made in quantities of 1000 parts per million for examples 12-15. The average extinguishing time and burning limits are presented below in Table 2.

### Table 2

| Example | Coating | Average Density $(g.l^{-1})$ | Extinguishing Time (ave.) | (sec.) |
|---|---|---|---|---|
| 11 | Uncoated | 64 | 0.4 max<br>min | 0.8<br>0.2 |
| 12 | Titanium Dioxide | 64 | 0.4 max<br>min | 0.6<br>0.2 |
| 13 | Aluminum Hydrate | 67 | 0.7 max<br>min | 1.6<br>0.4 |
| 14 | Aluminum Oxide | 67 | 0.8 max<br>min | 1.8<br>0.5 |
| 15 | Silicon Dioxide coated with ~5% Polydimethyl siloxane | 67 | 1.4 max<br>min | 3.0<br>0.4 |

Foam made from beads coated with titanium dioxide exhibit better extinguishing times than foams made from beads with other coatings, and show a narrower burning limit than foam made from the uncoated beads.

The average density is higher than usually encountered for commercial articles which are usually made at a density of about 16 g .$1^{-1}$.

### Example 16

A mixture of 600 parts per million of a finely divided, substantially pure grade of titanium dioxide and 600 parts per million of zinc stearate is coated on expandable polystyrene beads by mixing in a medium intensity blender to achieve a uniform coating. The coated beads are expanded, with a steam pressure of 0.35 bar. The beads are allowed to sit for 24 hours, then molded at a line pressure of 1.4 bar and a back pressure of 0.9 bar to yield a molded block.

## Examples 17 - 27

Tests were run to show the effect of particle size of titanium dioxide on expander build up in the steam expander. Examples 17 - 27 used a Rodman No. 2 expander at a steam pressure of 15 pounds per square inch. The results show that lumping and expander buildup on walls and agitator were acceptable with the titanium dioxide coated particles of the invention. The results also show that uncoated beads and beads coated with a titanium dioxide particle size of 15 microns to 500 microns were unworkable in that the expander froze up and parts could not be molded. The results are presented in Table 3 below.

Table 3

| Example | Titanium Dioxide Median Particle Size (mu) | Expansion Rate (pph) | Density $(g.l^{-1})$ | Agglomeration (%) | Expander Buildup (%) |
|---|---|---|---|---|---|
| 17 | --- | 450 | 18.1 | ND | 100 |
| 18 | 14 | 469 | 19.4 | 0.2 | 20 |
| 19 | 240 | 450 | 19.3 | 0.2 | 20 |
| 20 | 160 | 450 | 19.5 | 0.1 | 20 |
| 21 | 210 | 450 | 18.8 | <0.1 | 15 |
| 22 | 220 | 450 | 19.3 | <0.1 | 20 |
| 23 | 220 | 432 | 18.8 | <0.1 | 15 |
| 24 | --- | 372 | 17.6 | ND | 100 |
| 25 | 14 | 360 | 18.0 | <0.1 | 15 |
| 26 | 50,000 | 360 | 17.6 | ND | 100 |
| 27 | 15,000 | 338 | 18.1 | ND | 100 |

O.Z. 2970/01125

The embodiments of the invention in which an exclusive privilege or property is claimed are defined as follows:

1. Expandable polystyrene beads having a diameter of 0.2 millimeter to 5.0 millimeters and coated with 50 parts per million to 5000 parts per million, based on the weight of beads to be treated, of a finely divided titanium dioxide having a particle size between 5 millimicrons and 1000 millimicrons.

2. The beads of claim 1 having a diameter of 0.4 millimeter to 1.0 millimeter.

3. A process of subjecting the beads of claim 1 to expansion to produce a finished article having a bulk density of 14.5 to 80 $\left[ g \cdot 1^{-1} \right]$.